# EUROPÄISCHE PATENTSCHRIFT

(11) **EP 3 757 423 B1**
(45) Veröffentlichungstag und Bekanntmachung des Hinweises auf die Patenterteilung: **03.07.2024**
(21) Anmeldenummer: 20181456.3
(22) Anmeldetag: 22.06.2020
(51) Int. Cl.: F16H 3/089

(54) **SCHALTGETRIEBE**
CONTROL GEAR
BOÎTE DE VITESSES

(30) Priorität: 27.06.2019 DE 102019209348
(43) Veröffentlichungstag der Anmeldung: 30.12.2020
(73) Patentinhaber: Deere & Company, Moline, IL 61265 (US)
(72) Erfinder: Raisch, Stefan, 68163 Mannheim (DE)
(74) Vertreter: Dehnhardt, Florian Christopher

(56) Entgegenhaltungen:
- WO-A1-2008/058858
- DE-A1-102017 102 579

## Beschreibung

Die vorliegende Erfindung betrifft ein Schaltgetriebe, insbesondere ein Lastschaltgetriebe für Landmaschinen.

Bei Lastschaltgetrieben handelt es sich um eine spezielle Form von Fahrzeuggetrieben, bei denen die Übersetzung unter Last, also während der Fahrt, ohne Unterbrechung des Drehmoments geändert werden kann. Dadurch können auch während des Schaltvorgangs Vortriebskräfte übertragen werden, sodass das Fahrzeug auch während des Schaltvorgangs weiter beschleunigen kann. Somit ergeben sich beim Schaltvorgang keine Komforteinbußen. Bei landwirtschaftlichen Nutzfahrzeugen, insbesondere bei Traktoren, werden vorwiegend Lastschaltgetriebe eingesetzt, weil sie insbesondere bei der Arbeit in hügeligem Gelände und auf wechselnden Bodenarten eine schnellere Arbeit ermöglichen und helfen, Kraftstoff zu sparen. Manche Traktorgetriebe sind auch nur teillastschaltbar, das bedeutet, dass nur zwischen manchen Gängen ohne Zugkraftunterbrechung geschaltet werden kann, während andere (zum Beispiel Gruppenwechsel) mit einer Zugkraftunterbrechung verbunden sind.

Es ist bekannt, derartige Getriebe in Verbindung mit Planetengetrieben und Kupplungen in einem Baukastensystem auszubilden, sodass das Schaltgetriebe, durch entsprechende Ausbildung und Anordnung von Zahnradpaarungen des Planetengetriebes in verschiedenen Betriebsmodi, wie Durchtriebsmodus, Untersetzungsmodus und Reversiermodus betrieben werden können. So werden an Traktoren des Landmaschinenherstellers John Deere Lastschaltgetriebe als Getriebevorstufe eingesetzt, die je nach Ausbildung eines Stufenplanetensatzes entweder in den Betriebsmodi Durchtriebsmodus bzw. Reversiermodus oder in den Betriebsmodi Durchtriebsmodus bzw. Untersetzungsmodus betrieben werden können.

In der EP 0 745 198 B1 wird ein Lastschaltgetriebe für mobile Arbeitsmaschinen beschrieben, sowie ein Verfahren zur Steuerung dieses Lastschaltgetriebes. Dabei kommen Hydromotoren zum Einsatz, die über eine Kupplung miteinander verbunden sind. In einem unteren Geschwindigkeitsbereich werden die Hydromotoren drehmomentaddierend zusammengeschaltet. Einer der Hydromotoren wird über eine weitere Kupplung umgestaltet, sodass die Hydromotoren in einer oberen Geschwindigkeitsbereichsdrehzahl addierend betrieben werden können.

In der WO 2013/064371 A1 wird ein Lastschaltgetriebe mit einer Eingangswelle und einer dazu koaxial angeordneten Ausgangswelle beschrieben. Das Lastschaltgetriebe weist einen Planetengetriebesatz auf. Das Planetengetriebe umfasst einen Planetenträger, der mit der Eingangswelle in Verbindung steht. Mit einem Schaltelement ist die erste Ausgangswelle mit der ausgangsseitigen Sonne eines Stufenplanetensatzes verbindbar. Mit einem zweiten Schaltelement ist die erste Ausgangswelle direkt mit der Eingangswelle verbindbar. Das eingangsseitige Sonnenrad des Stufenplanetensatzes ist drehfest mit einem Gehäuseteil des Lastschaltgetriebes verbunden.

WO2008/058858 ist ein Doppelkupplungswindungsgetriebe beschrieben, mit zwei Teilgetrieben mit zwei parallel angeordneten Getriebewellen, wobei jeweils ein Teilbereich in den Leistungsstrang geschaltet werden kann.

Ausgehend von diesem Stand der Technik, liegt der Erfindung die Aufgabe zugrunde, ein Schaltgetriebe anzugeben, dass einerseits mit einer hohen Anzahl von Gang-Varianten bei zugleich kompakter Größe realisierbar ist und dass andererseits für einen breiten Einsatzbereich verwendbar ist.

Diese Aufgabe wird gelöst durch ein Schaltgetriebe gemäß Patentanspruch 1.

Erfindungsgemäß weist das Schaltgetriebe eine erste Welle und eine parallel dazu angeordnete zweiten Welle auf, wobei Schalteinheiten auf der ersten Welle (51) und Schalteinheiten auf der zweiten Welle angeordnet sind, wobei die erste Welle zumindest zwei Schalteinheiten und die zweite Welle zumindest drei Schalteinheiten aufweist, wobei die Schalteinheiten derart ausgebildet sind, dass die Schalteinheiten der ersten Welle jeweils zwei Zahnräder an einem Koaxialwellenabschnitt aufweisen, und zwei Schalteinheiten der zweiten Welle jeweils ein Zahnrad an einem Koaxialwellenabschnitt aufweisen, wobei eine weitere Schalteinheit der zweiten Welle eine Anzahl von Zahnrädern an Koaxialwellenabschnitten aufweist, die der Anzahl der Schalteinheiten der ersten Welle entsprechen, wobei die Schalteinheiten der zweiten Welle einen Koaxialwellenabschnitt aufweisen, ein jeweils auf dem Koaxialwellenabschnitt angeordnetes Zahnrad und jeweils ein Schaltelement, über das der jeweilige Koaxialwellenabschnitt mit der Ausgangswelle gekoppelt werden kann, so dass ein Drehmoment von der ersten Welle auf die zweite Welle geleitet werden kann, und durch die weitere Schalteinheit der zweiten Welle wieder auf die erste Welle geleitet wird, und von dort über die zweite Welle zum Antrieb geleitet wird. Schaltbar meint in diesem Zusammenhang, dass über die entsprechende Schalteinheit ein Drehmoment von der Zwischenwelle auf die Ausgangswelle übertragen werden kann. Dies erfolgt üblicherweise durch Betätigung von Schaltelementen, vorzugsweise Kupplungen, wobei jeweils eine Kupplung die Schalteinheit der ersten Welle und eine andere Kupplung die Schalteinheit der zweiten Welle betätigt. Jeder Gang des Lastschaltgetriebes wird daher einerseits über die Zukopplung einer Schalteinheit der ersten Welle und andererseits über die Zukopplung einer Schalteinheit der zweiten Welle definiert, wobei gemäß der vorliegenden Erfindung jede Schalteinheit der zweiten Welle mit jeder Schalteinheit der ersten Welle schaltbar ist.

Grundsätzlich liegt es im Rahmen der Erfindung, dass die erste und die zweite Schalteinheit der zweiten Welle mit allen Schalteinheiten der ersten Welle mittelbar unter Einbindung der dritten Schalteinheit der zweiten Welle schaltbar sind. Hierbei können beispielsweise die erste und die zweite Schalteinheit der zweiten Welle jeweils über eine Zahnradanordnung und einer Zwischenwelle mit der dritten Schalteinheit der zweiten Welle in Verbindung stehen.

Bei einer bevorzugten Ausführung der Erfindung weist die Schalteinheit der ersten Welle zumindest drei Gangeinheiten auf.

Allerdings sieht eine bevorzugte Ausgestaltung der Erfindung vor, dass eine erste und eine zweite Schalteinheit der zweiten Welle lediglich mit jeweils einer Schalteinheit der ersten Welle unmittelbar geschalten werden kann, während andere Schalteinheiten der ersten Welle nur unter Einbindung der dritten Schalteinheit der zweiten Welle schaltbar sind. In einem solchen Fall erfolgt eine Übertragung des Drehmomentes von einer Schalteinheit der ersten Welle auf die dritte Schalteinheit der zweiten Welle und wieder zurück auf die Schalteinheit der ersten Welle, die unmittelbar mit der zu schaltenden ersten oder zweiten Schalteinheit der zweiten Welle schaltbar ist. Durch eine solche Ausgestaltung kann in einfacher Art und Weise eine kompakte Baugröße erreicht werden, ohne dass eine Vielzahl von Zahnradpaaren notwendig ist, über die üblicherweise eine Übertragung des Drehmomentes von der Zwischenwelle auf die Ausgangswelle erfolgt. Zugleich kann in vorteilhafter Weise eine Schaltung für den relevanten Drehzahlbereich mit möglichst wenigen Übersetzungseingriffen realisiert werden, wobei jeder Übersetzungseingriff einen Wirkungsgradverlust darstellt und demnach eine Reduzierung von Übersetzungseingriffen angestrebt wird.

Die erste Welle kann unmittelbar als Eingangswelle und die zweite Welle als Ausgangswelle ausgebildet sein. Über die Eingangswelle kann das Schaltgetriebe mit einer Antriebsmaschine, z. B. einem Verbrennungsmotor verbunden werden, sodass das eingespeiste Drehmoment über das Schaltgetriebe auf die Ausgangswelle übertragen werden kann. An der Ausgangswelle kann dann eine Arbeitsmaschine oder eine Antriebswelle, z. B. für Räder, angeschlossen werden.

Um die erfindungsgemäße Ausgestaltung in vorteilhafter Weise ausbilden zu können, ist die dritte Schalteinheit der zweiten Welle zwischen der ersten und der zweiten Schalteinheit angeordnet. Die erste und die zweite Schalteinheit stellen demnach die äußeren Schalteinheiten der Schalteinheiten der zweiten Welle dar, die bevorzugt unmittelbar mit äußeren Schalteinheiten der ersten Welle in Eingriff stehen.

Hierzu weisen die Schalteinheiten der ersten Welle einen die erste Welle und Schalteinheiten der zweiten Welle einen die zweite Welle drehbar umschließenden Koaxialwellenabschnitt und jeweils zumindest ein auf dem Koaxialwellenabschnitt angeordnetes Zahnrad auf, wobei die Zahnräder der Schalteinheiten der zweiten Welle mit Zahnrädern der Schalteinheiten der ersten Welle in Eingriff stehen und wobei die Koaxialwellenabschnitte mit der ersten Welle oder der zweiten Welle koppelbar sind. Dementsprechend besteht jede Schalteinheit der ersten und zweiten Welle aus einem Koaxialwellenabschnitt, zumindest einem Zahnrad und einem Schaltelement. Bei dem Schaltelement kann es sich beispielweise um eine Kupplung, eine Klauenschaltung oder eine Synchronisierung handeln. Sofern beispielsweise das Schaltelement der Schalteinheit der ersten Welle betätigt wird, kann das Drehmoment von der ersten Welle auf die entsprechende Schalteinheit übertragen werden, sodass folglich die auf dem Koaxialwellenabschnitt der Schalteinheit angeordneten Zahnräder zur Wirkung kommen. Die Zahnräder der Schalteinheit stehen in unmittelbarem Eingriff mit jeweils einem Zahnrad einer Schalteinheit der zweiten Welle, sodass folglich auch diese Schalteinheit der zweiten Welle rotiert. Sofern für diese Schalteinheiten der zweiten Welle ein Schaltelement einwirkt, also beispielsweise eine Kupplung geschlossen wird, erfolgt die Drehmomentübertragung von dem Koaxialwellenabschnitt der Schalteinheit auf die zweite Welle.

Durch eine solche Ausgestaltung kann der erfindungsgemäße Gedanke in vorteilhafter Weise verwirklicht werden. Demnach weisen die mit der ersten oder der zweiten Schalteinheit der zweiten Welle unmittelbar in Eingriff stehenden Schalteinheiten der ersten Welle zwei Zahnräder auf, wobei jeweils eines der Zahnräder mit einem Zahnrad der dritten Schalteinheit der zweiten Welle und das jeweils andere Zahnrad mit einem Zahnrad der ersten oder der zweiten Schalteinheit der zweiten Welle in Eingriff steht. Hierdurch kann über die beiden Zahnräder der jeweiligen Schalteinheit der ersten Welle eine Drehmomentübertragung von der dritten Schalteinheit der zweiten Welle auf die erste oder zweite Schalteinheit übertragen werden.

Damit alle Schalteinheiten der ersten Welle mit allen Schalteinheiten der zweiten Welle geschaltet werden können, weist die dritte Schalteinheit der zweiten Welle bevorzugt eine Anzahl von Zahnrädern auf, die zumindest der Anzahl der Schalteinheiten der ersten Welle entspricht. Sofern beispielsweise die erste Welle über vier Schalteinheiten verfügt, so sind dementsprechend bevorzugt vier Zahnräder auf dem Koaxialwellenabschnitt der dritten Schalteinheit der zweiten Welle vorgesehen. Diese Zahnräder stehen jeweils mit einem Zahnrad jeder Schalteinheit der ersten Welle in Eingriff. Gemäß einer üblichen Ausgestaltung stellen die Zahnräder der Schalteinheiten der zweiten Welle Sekundärzahnräder bzw. Abtriebszahnräder dar, da ein Drehmoment von den Schalteinheiten der ersten Welle auf die Schalteinheiten der zweite Welle übertragen wird.

Zwei der Zahnräder der dritten Schalteinheit der zweiten Welle können jedoch durch die erfindungsgemäße Ausgestaltung sowohl als Antriebs- als auch ein Abtriebszahnrad bzw. als Primär- und Sekundärzahnrad ausgebildet sein. Hierbei handelt es sich bevorzugt um die äußeren Zahnräder der dritten Schalteinheit der zweiten Welle, die jeweils mit einem Zahnrad einer Schalteinheit der ersten Welle in Eingriff stehen, die wiederum unmittelbar mit der ersten oder der zweiten Schalteinheit der zweiten Welle gekoppelt ist.

Gemäß einer alternativen Anordnung ist es auch möglich, dass zumindest eine der Schalteinheiten der ersten Welle nicht auf der ersten Welle, sondern auf der zweiten Welle angeordnet ist. In einem solchen Fall umschließt ein Koaxialwellenabschnitt dieser Schalteinheit einen Koaxialwellenabschnitt einer der Schalteinheiten der zweiten Welle in einer drehbaren Art und Weise, wobei der Koaxialwellenabschnitt der Schalteinheit mit dem Koaxialwellenabschnitt der zweiten Welle koppelbar ist. Bevorzugt handelt es sich bei der Schalteinheit der zweiten Welle um die dritte Schalteinheit und bei der Schalteinheit der ersten Welle um eine Schalteinheit, die nicht unmittelbar mit der ersten oder zweiten Schalteinheit der zweiten Welle in Eingriff steht. Bei einer solchen Ausgestaltung sind somit die zweite Welle, der Koaxialwellenabschnitt der zweiten Welle, z. B. der dritten Schalteinheit und der Koaxialwellenabschnitt der entsprechenden Schalteinheit der ersten Welle koaxial zueinander angeordnet, wobei das Schaltelement der zweiten Welle zwischen der zweiten Welle und dem Koaxialwellenabschnitt der zweiten Welle und das Schaltelement der ersten Welle zwischen dem Koaxialwellenabschnitt der zweiten Welle und dem Koaxialwellenabschnitt der ersten Welle angeordnet ist.

Auf dem Koaxialwellenabschnitt der ersten Welle ist ferner ein Zahnrad angeordnet, das bevorzugt mit einem fest auf der ersten Welle angeordneten Zahnrad in Eingriff steht, sodass dieses Zahnradpaar immer dann angetrieben ist, wenn auch die erste Welle rotiert. Eine Drehmomentübertragung auf den Koaxialwellenabschnitt der zweiten Welle erfolgt allerdings nur dann, wenn das Schaltelement der ersten Welle geschlossen ist.

In einer bevorzugten Weiterbildung der Erfindung ist eine dritte Welle parallel zu der ersten und der zweiten Welle angeordnet ist und steht über eine Schaltgruppe z.B. eine Hi-Lo-Schaltgruppe mit der ersten oder der zweiten Welle in Verbindung, wobei die Schaltgruppe dazu eingerichtet ist, die Drehzahl zu erhöhen oder zu verringern. Die dritte Welle kann der ersten Welle vorgeordnet oder der zweiten Welle nachgeordnet sein. Sofern die dritte Welle der ersten Welle vorgeordnet ist, handelt es sich bei der dritten Welle bevorzugt um die Eingangswelle. Bei einer Anordnung nach der zweiten Welle ist die dritte Welle bevorzugt als Ausgangswelle ausgebildet.

Die Schaltgruppe besteht bevorzugt aus zumindest zwei unterschiedlichen Zahnradpaaren, die sich hinsichtlich ihres Übersetzungsverhältnisses voneinander unterscheiden. Beide Zahnradpaare können unabhängig voneinander betätigt werden und weisen dementsprechend ein eigenes zugeordnetes Schaltelement auf.

Jedes dieser Zahnradpaare besteht aus einem Primärzahnrad und einem Sekundärzahnrad, wobei das Primärzahnrad als Antriebszahnrad und das Sekundärzahnrad als Abtriebszahnrad dient. Die Primärzahnräder sind in einer bevorzugten Ausgestaltung auf der ersten Welle und die Sekundärzahnräder auf der zweiten Welle angeordnet. Alternativ können die Primärzahnräder auch auf der zweiten Welle und die Sekundärzahnräder auf der dritten Welle angeordnet sein.

Damit die jeweiligen Zahnradpaare über das Schaltelement betätigbar sind, ist zumindest entweder das Primärzahnrad oder das Sekundärzahnrad auf einem Koaxialwellenabschnitt angeordnet, der die Eingangswelle oder die Zwischenwelle drehbar umschließt. Durch Betätigung des Schaltelements wird der jeweilige Koaxialwellenabschnitt mit der entsprechenden Welle verbunden, sodass folglich eine Drehmomentübertragung erfolgt. Das jeweils andere Zahnrad ist dementsprechend fest mit einer weiteren Welle verbunden.

In einer bevorzugten Ausgestaltung ist das Primärzahnrad des ersten Zahnradpaares auf einem Koaxialwellenabschnitt angeordnet, der die dritte Welle umschließt und das Sekundärzahnrad des zweiten Zahnradpaares auf einem Koaxialwellenabschnitt angeordnet, der die erste Welle umschließt. Dementsprechend ist das Primärzahnrad des ersten Zahnradpaares fest auf der dritten Welle und das Sekundärzahnrad des zweiten Zahnradpaares fest auf der ersten Welle montiert.

In einer Weiterbildung der Erfindung kann auch eine Reversiereinheit in der Schaltgruppe integriert sein, sodass hierdurch eine Umkehrung der Drehrichtung erfolgt.

In einer darüber hinausgehenden Weiterbildung kann auch ein drittes Zahnradpaar in analoger Weise zu dem ersten oder zweiten Zahnradpaar ausgebildet sein, wobei das dritte Zahnradpaar vorzugsweise ein gegenüber dem ersten und dem zweiten Zahnradpaar unterschiedliches Übersetzungsverhältnis aufweist.

Das erfindungsgemäße Schaltgetriebe kann mit einer unterschiedlichen Anzahl von Gangeinheiten und Bereichseinheiten betrieben werden, bei einer exemplarischen Ausgestaltung mit sowohl vier Gangeinheiten und drei Bereichseinheiten sowie zwei Zahnradpaaren in der Schaltgruppe ergibt sich eine Anzahl von 24 Gängen.

Sofern die Anzahl der Bereichseinheiten erhöht werden soll, kann dies beispielsweise dadurch erfolgen, dass eine vierte Bereichseinheit auf die zweite Welle aufgesetzt wird, ohne dass die Anordnung der anderen Bereichseinheiten zueinander geändert wird. Diese vierte Bereichseinheit ist analog zu den anderen Bereichseinheiten aus einem Koaxialwellenabschnitt, einem Zahnrad und einem Schaltelement gebildet. Das Zahnrad steht mit einem fest auf einer Nebenwelle montierten Zahnrad in Eingriff. Ferner ist auf der Nebenwelle ein weiteres Zahnrad angeordnet, das mit einem auf dem Koaxialwellenabschnitt der dritten Bereichseinheit angeordneten Zahnrad in Eingriff steht. Somit kann über zwei Zahnradpaare und einer Nebenwelle eine Drehmomentübertragung von der dritten Bereichseinheit auf die vierte Bereichseinheit erfolgen. Durch die beiden Zahnradpaare kann darüber hinaus eine Über- bzw. eine Untersetzung realisiert werden.

Wenngleich das Schaltgetriebe in seiner Kernfunktion dafür ausgelegt ist, ein Drehmoment von einer Eingangswelle auf eine Ausgangswelle zu übertragen, so können an allen Wellen Arbeitsmaschinen, wie z. B. Pumpen, angeschlossen werden, sodass eine Vielzahl von unterschiedlichen Maschinen bei unterschiedlicher Drehzahl und Lastzuständen betrieben werden können.

Im Folgenden wird die Erfindung anhand von lediglich Ausführungsbeispielen zeigender Figuren beschrieben. Es zeigen:
- Figur 1: eine schematische Darstellung einer landwirtschaftlichen Arbeitsmaschine,
- Figur 2: ein erfindungsgemäßes Schaltgetriebe gemäß einer ersten Variante
- Figur 3: eine alternative Ausgestaltung des Schaltgetriebes gemäß Fig. 1,
- Figur 4: eine alternative Ausgestaltung des Schaltgetriebes gemäß Fig. 1,
- Figur 5: eine alternative Ausgestaltung des Schaltgetriebes gemäß Fig. 1.

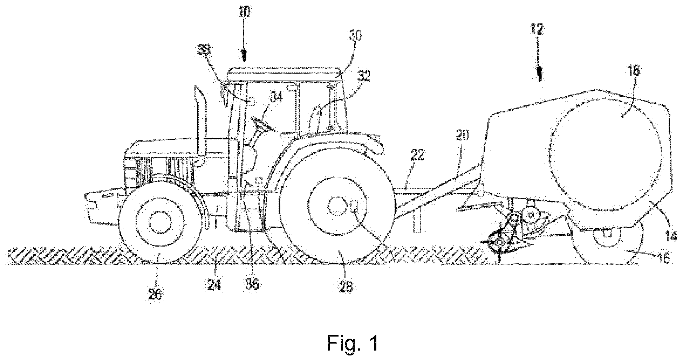

Figur 1 zeigt eine landwirtschaftliche Arbeitsmaschine in Form eines Traktors 10 und eines vom Traktor gezogenen beliebigen Gerätes 12, das im Ausführungsbeispiel rein exemplarisch als Rundballenpresse ausgeführt ist. Das Gerät 12 umfasst ein auf Rädern 16 abgestütztes Fahrgestell 14 mit einer Ballenbildungskammer 18. Das Gerät 12 wird über eine Deichsel 20 vom Traktor 10 gezogen. Ihre antreibbaren Elemente werden mittels einer Zapfwelle 22 vom Traktor 10 angetrieben.

Der Traktor 10 umfasst ein Fahrgestell 24, das sich auf vorderen, lenkbaren Rädern 26 und rückwärtig angetriebenen Rädern 28 abstützt. Ein Bedienerarbeitsplatz mit einem Sitz 32 befindet sich in einer Kabine 30. Vom Sitz aus sind ein Lenkrad 34, ein Gaspedal 36 und eine Bedienerstelle 38 betätigbar.

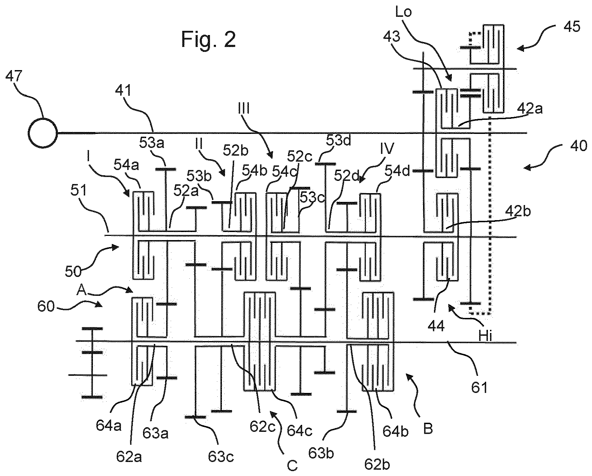

Die Figur 2 zeigt das erfindungsgemäße Schaltgetriebe gemäß einer ersten Ausgestaltungsvariante. Das Schaltgetriebe weist eine Eingangswelle 41, eine Zwischenwelle 51 und eine Ausgangswelle 61 auf, wobei die Zwischenwelle 51 parallel versetzt zwischen der Eingangswelle 41 und der Ausgangswelle 61 innerhalb eines Gehäuses angeordnet ist.

Die Eingangswelle 41 ist unmittelbar an eine Antriebsmaschine 47 gekoppelt, wobei die Drehmomentübertragung von der Antriebsmaschine 47 auf die Ausgangswelle 61 über eine Schaltgruppe 40, eine Ganggruppe 50 und eine Bereichsgruppe 60 erfolgt.

Hierbei ist die Schaltgruppe 40 als Hi-Lo-Schaltgruppe ausgebildet und zwischen der Eingangswelle 41 und der Zwischenwelle 51 angeordnet, wobei mittels der Schaltgruppe 40 unterschiedliche Übersetzungs- bzw. Untersetzungsverhältnisse zwischen der Eingangswelle 41 und der Zwischenwelle 51 realisierbar sind. Dies erfolgt über ein erstes Zahnradpaar der Schaltgruppe Lo und eine zweites Zahnradpaar der Schaltgruppe Hi. Hierbei ist das Zahnradpaar Lo bevorzugt in einem niedrigen Drehzahlbereich und das Zahnradpaar Hi in einem hohen Drehzahlbereich einzusetzen.

Um diese einzelnen Zahnradpaare Lo, Hi schalten zu können, sind zwei Schaltelemente in Form von Kupplungen 43, 44 in Form einer Lamellenkupplung vorgesehen, wobei die Kupplung 43 das Zahnradpaar Lo und die Kupplung 44 das Zahnradpaar Hi einkoppelt. Das Zahnradpaar Lo besteht aus einem Koaxialwellenabschnitt 42a und einem auf dem Koaxialwellenabschnitt 42a angeordneten Zahnrads, das mit einem fest auf der Zwischenwelle 51 montierten Zahnrad zusammenwirkt. Im Gegensatz dazu weist das zweite Zahnradpaar Hi einen Koaxialwellenabschnitt 42b auf, auf dem ein Zahnrad mit einem auf der Eingangswelle 41 fest montierten Zahnrad zusammenwirkt.

Ferner ist auch eine Reversiereinheit 45 vorgesehen, über die die Rotationsrichtung der Zwischenwelle 51 umgekehrt werden kann.

Um die einzelnen Zahnradpaare der Schaltgruppe Lo, Hi zu schalten, wird - wie bereits zuvor erläutert - eine Kupplung 43, 44 betätigt, die den Koaxialwellenabschnitt 42a, 42b mit der entsprechenden Eingangswelle 41 oder der Zwischenwelle 51 koppelt. Hierdurch wird das Drehmoment von der Antriebsmaschine 47 über die Innenwelle 41 und die Schaltgruppe 40 auf die Zwischenwelle 51 übertragen.

Ausgehend von der Zwischenwelle 51 erfolgt dann eine Übertragung des Drehmomentes auf die Ausgangswelle 61 über eine Ganggruppe 50 und eine Bereichsgruppe 60. Hierbei ist die Bereichsgruppe 60 derart ausgebildet, dass eine dritte Bereichseinheit C mit allen Schalteinheiten I, II, III, IV der Ganggruppe 50 und die erste und die zweite Bereichseinheit A, B der Bereichsgruppe 60 jeweils nur über eine Gangeinheit I, IV der Ganggruppe 50 unmittelbar schaltbar sind. In dem gezeigten Beispiel ist die Bereichseinheit A mit der Gangeinheit I und die Bereichseinheit B mit der Gangeinheit IV unmittelbar schaltbar. Sofern die Bereichseinheiten A, B mit anderen Gangeinheiten geschalten werden soll, kann dies nur mittelbar unter Einbindung der dritten Bereichseinheit C erfolgen.

Um dies zu realisieren verfügt jede Gangeinheit I, II, III, IV der Ganggruppe 50 über jeweils einen Koaxialwellenabschnitt 52a, 52b, 52c, 52d, über ein auf dem Koaxialwellenabschnitt 52a, 52b, 52c, 52d angeordnetes Zahnrad 53a, 53b, 53c, 53d sowie über ein Schaltelement, vorzugsweise eine Kupplung 54a, 54b, 54c, 54d in Form einer Lamellenkupplung, über die der jeweilige Koaxialwellenabschnitt 52a, 52b, 52c, 52d mit der Zwischenwelle 51 gekoppelt werden kann.

Analog hierzu ist auch die Bereichsgruppe 60 ausgebildet. Die Schalteinheiten A, B, C verfügen ebenfalls jeweils über einen Koaxialwellenabschnitt 62a, 62b, 62c, ein jeweils auf dem Koaxialwellenabschnitt 62a, 62b, 62c angeordnetes Zahnrad 63a, 63b, 63c und jeweils ein Schaltelement, vorzugsweise eine Lamellenkupplung 64a, 64b, 64c über die der jeweilige Koaxialwellenabschnitt 62a, 62b, 62c mit der Ausgangswelle 61 gekoppelt werden kann.

Die dritte Bereichseinheit C der Bereichsgruppe 60 verfügt über insgesamt vier Zahnräder 63c, wobei jedes Zahnrad 63c einem der Zahnräder 53a, 53b, 53c, 53d der Gangeinheiten I, II, III, IV der Ganggruppe 50 zugeordnet ist bzw. mit denen sie in Eingriff stehen. Demnach richtet sich die Anzahl der Zahnräder 63c der dritten Bereichseinheit C der Bereichsgruppe 60 an der Anzahl der Schalteinheiten I, II, III, IV der Ganggruppe 50.

Die erste Bereichseinheit A der Bereichsgruppe 60 weist nur ein Zahnrad 63a auf, das mit dem Zahnrad 53a der ersten Schalteinheit I der Ganggruppe 50 in Verbindung steht. Entsprechend weist auch die zweite Schalteinheit B nur ein Zahnrad 64b auf, das mit einem Zahnrad 53d der Schalteinheit IV der Ganggruppe 50 in Eingriff steht.

Durch eine solche Ausgestaltung ist es nunmehr möglich, dass beispielsweise auch die vierte Gangeinheit IV mit der ersten Bereichsgruppe A geschaltet werden kann. Hierzu wird die Kupplung 54d der vierten Gangeinheit IV betätig, so dass das Drehmoment der Zwischenwelle 51 erst auf den Koaxialwellenabschnitt und anschließend auf das Zahnrad 53d übertragen, dass mit einem Zahnrad 63c der dritten Bereichseinheit C in Eingriff steht.

Somit erfolgt eine Drehmomentübertragung über das Zahnrad 63c auf den Koaxialwellenabschnitt 62c der dritten Bereichseinheit C. Die Kupplung 64c ist hierbei nicht betätigt, so dass der Koaxialwellenabschnitt 62c von der Ausgangswelle 61 entkoppelt ist. Über ein weiteres Zahnrad 63c der dritten Bereichseinheit C erfolgt nunmehr eine Drehmomentübertragung auf die erste Gangeinheit I. Dadurch, dass zumindest zwei Zahnräder 53a auf dem Koaxialwellenabschnitt 52a der ersten Gangeinheit I angeordnet sind, kann anschließend das Drehmoment auf die erste Bereichseinheit A übertragen werden. In analoger Weise kann auch die zweite Bereichseinheit B über die erste Gangeinheit I geschalten werden, wobei dann das Drehmoment über die dritte Bereichseinheit C und die vierte Gangeinheit IV geleitet wird. Auch eine Schaltung der ersten oder der zweiten Bereichseinheit A, B über die zweite oder dritte Gangeinheit II, III erfolgt stets über die dritte Bereichseinheit C.

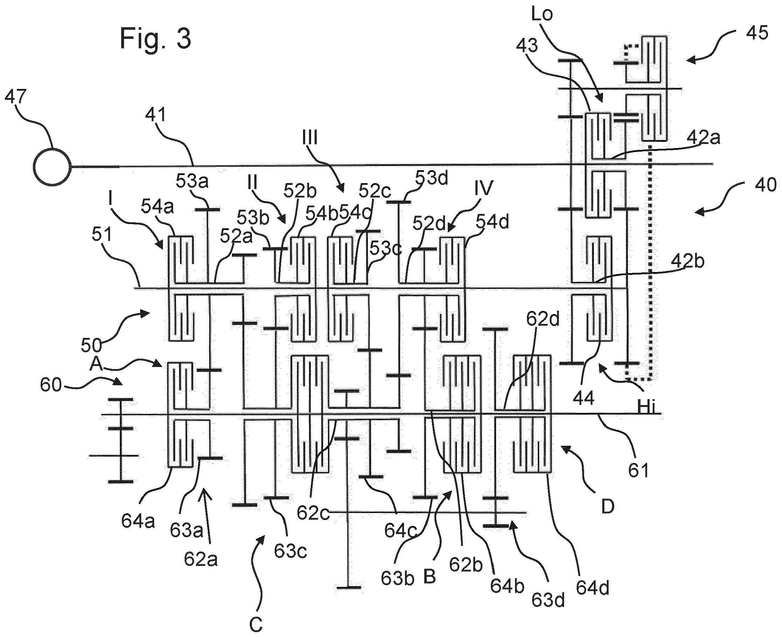

Die Figur 3 zeigt eine alternative Ausgestaltung des Schaltgetriebes gemäß der Figur 2, wobei eine vierte Bereichseinheit D der Bereichsgruppe 60 vorgesehen ist, die ebenfalls mit jeder der Gangeinheiten I, II, III, IV der Ganggruppe 50 geschaltet werden kann. Die Bereichseinheit D ist außen auf der Ausgangswelle 61 angeordnet und über eine zwei Zahnradpaare und eine Nebenwelle aufweisende Einrichtung 63d mit dem Koaxialwellenabschnitt 62c der dritten Bereichseinheit C der Bereichsgruppe 60 verbunden. Über die beiden Zahnradpaare der Einrichtung 63d erfolgt eine Untersetzung zwischen dem Koaxialwellenabschnitt 62c der dritten Bereichseinheit C und dem Koaxialwellenabschnitt 62d der Schalteinheit D.

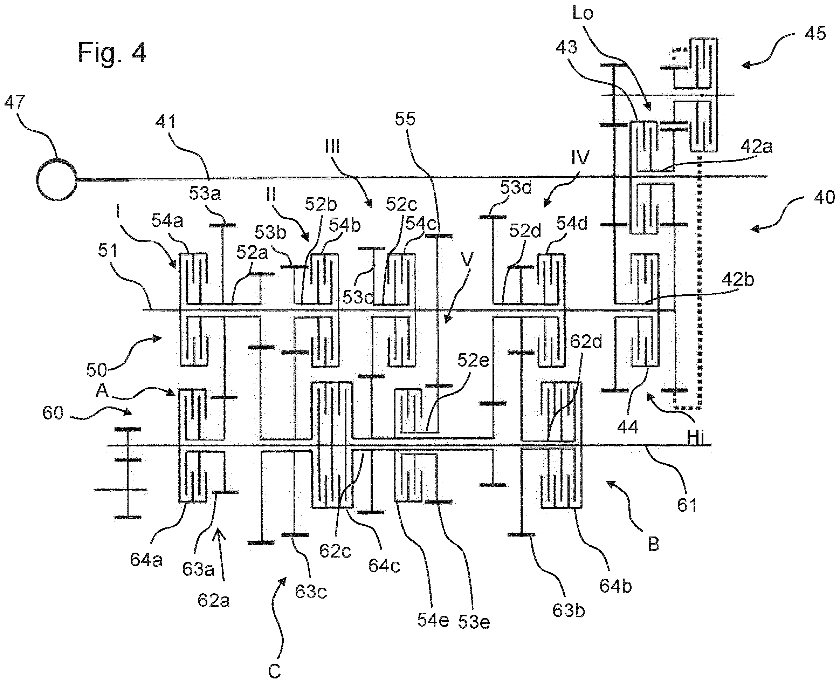

Gemäß der Ausgestaltungsvariante der Figur 4 ist nunmehr eine fünfte Gangeinheit V der Ganggruppe 50 vorgesehen, wobei die Gangeinheit V einen Koaxialwellenabschnitt 52e aufweist, der sowohl die Ausgangswelle 61 als auch den Koaxialwellenabschnitt 62c der dritten Bereichseinheit C der Bereichsgruppe 60 umschließt. Somit ist die Gangeinheit V der Ganggruppe 50 grundsätzlich auf der Ausgangswelle 61 und nicht auf der Zwischenwelle 51 angeordnet. Eine Drehmomentübertragung von der Zwischenwelle 51 auf die Gangeinheit V erfolgt mittels einem fest auf der Zwischenwelle 51 montierten Zahnrad 55, das mit einem auf dem Koaxialwellenabschnitt 52e montierten Zahnrad 53e in Eingriff steht. Eine Kopplung zwischen dem Koaxialwellenabschnitt 52e und dem Koaxialwellenabschnitt 62c erfolgt mittels einer Kupplung 54e.

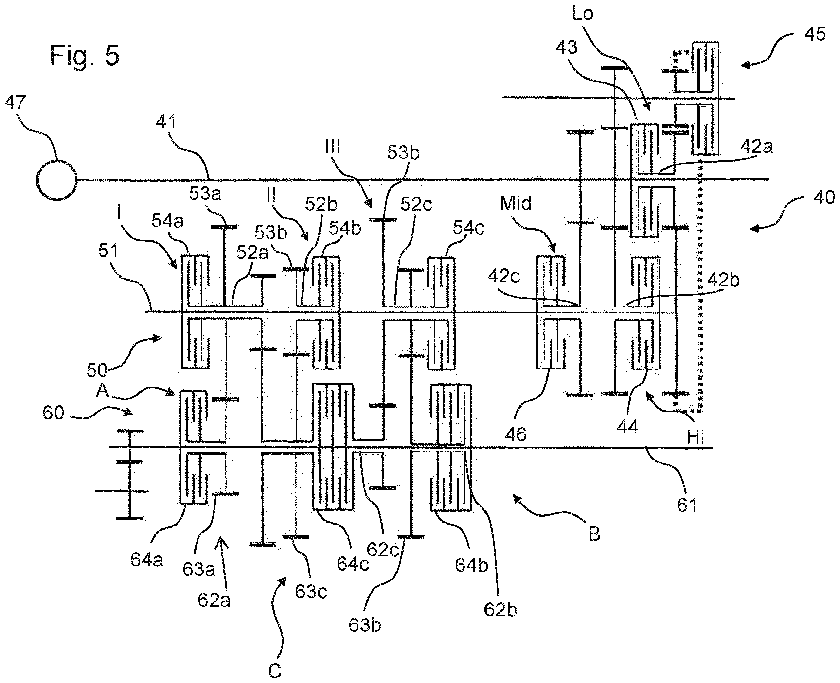

Die in der Figur 5 dargestellte Variante entspricht im Wesentlichen dem Schaltgetriebe gemäß der Figur 1, wobei die Schaltgruppe 40 nunmehr ein drittes Zahnradpaar Mid aufweist und demnach als Hi-Mid-Lo-Schaltgruppe ausgebildet ist, wobei das dritte Zahnradpaar Mid vorzugsweise in einem mittleren Drehzahlbereich einsetzbar ist.

## Patentansprüche

1. Schaltgetriebe mit
einer ersten Welle (51) und einer parallel dazu angeordneten zweiten Welle (61), wobei Schalteinheiten (I, II, III, IV, V) auf der ersten Welle (51) und Schalteinheiten (A, B, C, D) auf der zweiten Welle (61) angeordnet sind,
wobei die erste Welle (51) zumindest zwei Schalteinheiten (I, II, III, IV, V) und die zweite Welle (61) zumindest drei Schalteinheiten (A, B, C, D) aufweist,
wobei die Schalteinheiten derart ausgebildet sind, dass die Schalteinheiten (I, II, III, IV, V) der ersten Welle (51) jeweils zwei Zahnräder an einem Koaxialwellenabschnitt aufweisen, und
zwei Schalteinheiten (A, B, C, D) der zweiten Welle (61) jeweils ein Zahnrad an einem Koaxialwellenabschnitt aufweisen,
wobei eine weitere Schalteinheit (A, B, C, D) der zweiten Welle (61) eine Anzahl von Zahnrädern an Koaxialwellenabschnitten aufweist, die der Anzahl der Schalteinheiten (I, II, III, IV, V) der ersten Welle (51) entsprechen,
wobei die Schalteinheiten (A, B, C, D) der zweiten Welle (61) einen Koaxialwellenabschnitt (62a, 62b, 62c) aufweisen, ein jeweils auf dem Koaxialwellenabschnitt (62a, 62b, 62c) angeordnetes Zahnrad (63a, 63b, 63c) und jeweils ein Schaltelement, über das der jeweilige Koaxialwellenabschnitt (62a, 62b, 62c) mit der Ausgangswelle (61) gekoppelt werden kann,
so dass ein Drehmoment von der ersten Welle (51) auf die zweite Welle (61) geleitet werden kann, und
durch die weitere Schalteinheit der zweiten Welle (61) wieder auf die erste Welle (51) geleitet wird, und von dort über die zweite Welle (61) zum Antrieb geleitet wird.

2. Schaltgetriebe nach Anspruch 1, wobei die zwei Schalteinheiten (A, B) der zweiten Welle (61) mit allen Schalteinheiten (I, II, III, IV) der ersten Welle (51) mittelbar unter Einbindung der weiteren Schalteinheit (C) schaltbar sind.

3. Schaltgetriebe nach Anspruch 2, wobei die zwei Schalteinheiten (A, B) der zweiten Welle (61) jeweils über eine Zahnradanordnung und eine Zwischenwelle mit der weiteren Schalteinheit (C) der zweiten Welle (61) in Verbindung stehen.

4. Schaltgetriebe nach Anspruch 1, wobei die Schalteinheiten (A, B) der zweiten Welle (61) jeweils mit einer Schalteinheit (I, II, III, IV) der ersten Welle (51) unmittelbar schaltbar sind.

5. Schaltgetriebe nach einem der Ansprüche 1 bis 4, wobei die weitere Schalteinheit (C) der zweiten Welle (61) zwischen den zwei Schalteinheiten (A, B) der zweiten Welle (61) angeordnet ist und mit allen Schalteinheiten (I, II, III, IV, V) der ersten Welle (51) in Eingriff steht.

6. Schaltgetriebe nach einem der Ansprüche 1 bis 5, wobei die Schalteinheiten (I, II, III, IV, V) der ersten Welle (51) einen die erste Welle (51) und die Schalteinheiten (A, B, C, D) der zweiten Welle (61) einen die zweite Welle (61) drehbar umschließenden Koaxialwellenabschnitt (52a, 52b, 52c, 52d, 52e, 62a, 62b, 62c, 62d) und jeweils zumindest ein auf dem Koaxialwellenabschnitt (52a, 52b, 52c, 52d, 52e, 62a, 62b, 62c, 62d) angeordnetes Zahnrad (53a, 53b, 53c, 53d, 53e, 63a, 63b, 63c, 63d) aufweisen, wobei die Zahnräder (63a, 63b, 63c, 63d) der Schalteinheiten (A, B, C) der zweiten Welle (61) mit Zahnrädern (53a, 53b, 53c, 53d, 53e) der Schalteinheiten (I, II, III, IV, V) der ersten Welle (51) in Eingriff stehen und wobei die Koaxialwellenabschnitte (52a, 52b, 52c, 52d, 52e, 62a, 62b, 62c, 62d) mit der ersten Welle (51) oder der zweiten Welle (61) koppelbar sind.

7. Schaltgetriebe nach Anspruch 6, wobei die mit den Schalteinheiten (A, B) der zweiten Welle (61) unmittelbar in Eingriff stehenden Schalteinheiten (I, IV) der ersten Welle (51) zumindest zwei Zahnräder (53a, 53d) aufweisen,
wobei jeweils eines der Zahnräder (53a, 53d) mit einem Zahnrad (63c) der weiteren Schalteinheit (C) der zweiten Welle (61) und das jeweils andere Zahnrad (53a, 53d) mit einem Zahnrad (63a, 63b) der Schalteinheiten (A, B) der zweiten Welle (61) in Eingriff stehen.

8. Schaltgetriebe nach Anspruch 6 oder 7, wobei die weitere Schalteinheit (C) der zweiten Welle (61) eine Anzahl von Zahnrädern (63c) aufweist, die zumindest der Anzahl der Schalteinheiten (I, II, III, IV, V) der ersten Welle (51) entspricht.

9. Schaltgetriebe nach einem der Ansprüche 1 bis 8, wobei zumindest eine Schalteinheit (V) auf der zweiten Welle (61) angeordnet ist,
wobei der Koaxialwellenabschnitt (52e) der Schalteinheit (V) der zweiten Welle (61) einen Koaxialwellenabschnitt (62c) einer der Schalteinheiten (A, B, C) der zweiten Welle (61) drehbar umschließt,
wobei der Koaxialwellenabschnitt (52e) der Schalteinheit (V) der zweiten Welle (61) mit dem Koaxialwellenabschnitt (62c) der Schalteinheiten (A, B, C) der zweiten Welle (61) koppelbar ist.

10. Schaltgetriebe nach einem der Ansprüche 1 bis 9, wobei eine dritte Welle (41) parallel zu der ersten und der zweiten Welle (51, 61) angeordnet ist und über eine Schaltgruppe (40) z.B. eine Hi-Lo-Schaltgruppe mit der ersten oder der zweiten Welle (51, 61) in Verbindung steht,
wobei die Schaltgruppe (40) dazu eingerichtet ist, die Drehzahl zu erhöhen oder zu verringern.

11. Schaltgetriebe nach einem der Ansprüche 1 bis 10, wobei die dritte Welle (41) der ersten Welle (51) vorgeordnet oder der zweiten Welle (61) nachgeordnet ist.

12. Schaltgetriebe nach Anspruch 11, wobei Primärzahnräder der Schaltgruppe (40) auf der dritten Welle (41) und Sekundärzahnräder der Schaltgruppe (40) auf der ersten Welle (51) angeordnet sind, wobei in einem betriebsgemäßen Zustand ein Drehmoment von den Primärzahnrädern auf die Sekundärzahnräder übertragen wird.

13. Schaltgetriebe nach einem der Ansprüche 10 bis 12, wobei die Schaltgruppe (40) zumindest zwei unterschiedliche Zahnradpaare (Hi, Lo) aufweist, die sich hinsichtlich ihres Übersetzungsverhältnisses voneinander unterscheiden.

14. Schaltgetriebe nach einem der Ansprüche 10 bis 13, wobei eine Reversiereinheit (45) in der Schaltgruppe (40) integriert ist.

15. Schaltgetriebe nach Anspruch 10 oder 14, wobei die Schaltgruppe (40) ein drittes Zahnradpaar (Mid) aufweist.

## Claims

1. Control gear having
a first shaft (51) and a second shaft (61) disposed parallel thereto, wherein shifting units (I, II, III, IV, V) are disposed on the first shaft (51) and shifting units (A, B, C, D) are disposed on the second shaft (61);
wherein the first shaft (51) has at least two shifting units (I, II, III, IV, V) and the second shaft (61) has at least three shifting units (A, B, C, D);
wherein the shifting units are configured in such a manner that the shifting units (I, II, III, IV, V) of the first shaft (51) have in each case two gear wheels on one coaxial shaft portion, and
two shifting units (A, B, C, D) of the second shaft (61) have in each case one gear wheel on one coaxial shaft portion;
wherein a further shifting unit (A, B, C, D) of the second shaft (61) has a number of gear wheels on coaxial shaft portions that correspond to the number of shifting units (I, II, III, IV, V) of the first shaft (51);
wherein the shifting units (A, B, C, D) of the second shaft (61) have a coaxial shaft portion (62a, 62b, 62c), a gear wheel (63a, 63b, 63c) which is in each case disposed on the coaxial shaft portion (62a, 62b, 62c), and in each case one shifting element by way of which the respective coaxial shaft portion (62a, 62b, 62c) can be coupled to the output shaft (61)
so that a torque can be directed from the first shaft (51) to the second shaft (61), and
directed through the further shifting unit of the second shaft (61) back to the first shaft (51) again, and from the latter by way of the second shaft (61) to the drive.

2. Control gear according to Claim 1, wherein the two shifting units (A, B) of the second shaft (61) are able to be shifted by all shifting units (I, II, III, IV) of the first shaft (51) indirectly while including the further shifting unit (C).

3. Control gear according to Claim 2, wherein the two shifting units (A, B) of the second shaft (61) are in each case connected to the further shifting unit (C) of the second shaft (61) by way of a gear wheel assembly and a layshaft.

4. Control gear according to Claim 1, wherein the shifting units (A, B) of the second shaft (61) are in each case able to be shifted directly by a shifting unit (I, II, III, IV) of the first shaft (51).

5. Control gear according to one of Claims 1 to 4, wherein the further shifting unit (C) of the second shaft (61) is disposed between the two shifting units (A, B) of the second shaft (61) and engages with all shifting units (I, II, III, IV, V) of the first shaft (51).

6. Control gear according to one of Claims 1 to 5, wherein the shifting units (I, II, III, IV, V) of the first shaft (51) have a coaxial shaft portion (52a, 52b, 52c, 52d, 52e, 62a, 62b, 62c, 62d) which rotatably encloses the first shaft (51), and the shifting units (A, B, C, D) of the second shaft (61) have a coaxial shaft portion (52a, 52b, 52c, 52d, 52e, 62a, 62b, 62c, 62d) which rotatably encloses the second shaft (61), and in each case at least one gear wheel (53a, 53b, 53c, 53d, 53e, 63a, 63b, 63c, 63d) which is disposed on the coaxial shaft portion (52a, 52b, 52c, 52d, 52e, 62a, 62b, 62c, 62d), wherein the gear wheels (63a, 63b, 63c, 63d) of the shifting units (A, B, C) of the second shaft (61) engage in gear wheels (53a, 53b, 53c, 53d, 53e) of the shifting units (I, II, III, IV, V) of the first shaft (51), and wherein the coaxial shaft portions (52a, 52b, 52c, 52d, 52e, 62a, 62b, 62c, 62d) are able to be coupled to the first shaft (51) or the second shaft (61).

7. Control gear according to Claim 6, wherein the shifting units (I, IV) of the first shaft (51) that engage directly in the shifting units (A, B) of the second shaft (61) have at least two gear wheels (53a, 53d);
wherein one of the gear wheels (53a, 53d) engages in each case in a gear wheel (63c) of the further shifting unit (C) of the second shaft (61), and the respective other gear wheel (53a, 53d) engages in a gear wheel (63a, 63b) of the shifting units (A, B) of the second shaft (61).

8. Control gear according to Claim 6 or 7, wherein the further shifting unit (C) of the second shaft (61) has a number of gear wheels corresponding to at least the number of shifting units (I, II, III, IV, V) of the first shaft (51).

9. Control gear according to one of Claims 1 to 8, wherein at least one shifting unit (V) is disposed on the second shaft (61);
wherein the coaxial shaft portion (52e) of the shifting unit (V) of the second shaft (61) rotatably encloses a coaxial shaft portion (62c) of one of the shifting units (A, B, C) of the second shaft (61);
wherein the coaxial shaft portion (52e) of the shifting unit (V) of the second shaft (61) is able to be coupled to the coaxial shaft portion (62c) of the shifting units (A, B, C) of the second shaft (61).

10. Control gear according to one of Claims 1 to 9, wherein a third shaft (41) is disposed parallel to the first and the second shaft (51, 61) and is connected to the first or the second shaft (51, 61) by way of a shifting group (40), for example a Hi-Lo shifting group; wherein the shifting group (40) is configured to increase or decrease the rotating speed.

11. Control gear according to one of Claims 1 to 10, wherein the third shaft (41) is disposed upstream of the first shaft (51) or downstream of the second shaft (61).

12. Control gear according to Claim 11, wherein primary gear wheels of the shifting group (40) are disposed on the third shaft (41), and secondary gear wheels of the shifting group (40) are disposed on the first shaft (51), wherein in an operating state a torque is transmitted from the primary gear wheels to the secondary gear wheels.

13. Control gear according to one of Claims 10 to 12, wherein the shifting group (40) has at least two dissimilar gear wheel pairs (Hi, Lo) which differ from one another in terms of their gear ratio.

14. Control gear according to one of Claims 10 to 13, wherein a reversing unit (45) is integrated in the shifting group (40).

15. Control gear according to Claim 10 or 14, wherein the shifting group (40) has a third gear wheel pair (Mid) .

## Revendications

1. Boîte de vitesses avec
un premier arbre (51) et un deuxième arbre (61) agencé parallèlement à celui-ci, des unités de commutation (I, II, III, IV, V) étant agencées sur le premier arbre (51) et des unités de commutation (A, B, C, D) étant agencées sur le deuxième arbre (61),
dans laquelle le premier arbre (51) présente au moins deux unités de commutation (I, II, III, IV, V) et le deuxième arbre (61) présente au moins trois unités de commutation (A, B, C, D),
dans laquelle les unités de commutation sont réalisées de telle sorte que les unités de commutation (I, II, III, IV, V) du premier arbre (51) présentent chacune deux roues dentées sur une section d'arbre coaxial, et
deux unités de commutation (A, B, C, D) du deuxième arbre (61) présentent chacune une roue dentée sur une section d'arbre coaxial,
dans laquelle une autre unité de commutation (A, B, C, D) du deuxième arbre (61) présente un nombre de roues dentées sur des sections d'arbre coaxial qui correspond au nombre d'unités de commutation (I, II, III, IV, V) du premier arbre (51),
dans laquelle les unités de commutation (A, B, C, D) du deuxième arbre (61) présentent une section d'arbre coaxial (62a, 62b, 62c), une roue dentée (63a, 63b, 63c) agencée respectivement sur la section d'arbre coaxial (62a, 62b, 62c) et un élément de commutation respectif par l'intermédiaire duquel la section d'arbre coaxial respective (62a, 62b, 62c) peut être couplée à l'arbre de sortie (61),
de telle sorte qu'un couple peut être dirigé du premier arbre (51) au deuxième arbre (61), et
est à nouveau dirigé vers le premier arbre (51) par l'autre unité de commutation du deuxième arbre (61), et de là est dirigé vers l'entraînement par l'intermédiaire du deuxième arbre (61).

2. Boîte de vitesses selon la revendication 1, dans laquelle les deux unités de commutation (A, B) du deuxième arbre (61) peuvent être commutées indirectement avec toutes les unités de commutation (I, II, III, IV) du premier arbre (51) en intégrant l'autre unité de commutation (C).

3. Boîte de vitesses selon la revendication 2, dans laquelle les deux unités de commutation (A, B) du deuxième arbre (61) sont chacune en communication avec l'autre unité de commutation (C) du deuxième arbre (61) par l'intermédiaire d'un agencement de roue dentée et d'un arbre intermédiaire.

4. Boîte de vitesses selon la revendication 1, dans laquelle les unités de commutation (A, B) du deuxième arbre (61) peuvent chacune être commutées directement avec une unité de commutation (I, II, III, IV) du premier arbre (51).

5. Boîte de vitesses selon l'une quelconque des revendications 1 à 4, dans laquelle l'autre unité de commutation (C) du deuxième arbre (61) est agencée entre les deux unités de commutation (A, B) du deuxième arbre (61) et est en prise avec toutes les unités de commutation (I, II, III, IV, V) du premier arbre (51).

6. Boîte de vitesses selon l'une quelconque des revendications 1 à 5, dans laquelle les unités de commutation (I, II, III, IV, V) du premier arbre (51) présentent une section d'arbre coaxial (52a, 52b, 52c, 52d, 52e, 62a, 62b, 62c, 62d) entourant le premier arbre (51) et les unités de commutation (A, B, C, D) du deuxième arbre (61) présentent une section d'arbre coaxial (52a, 52b, 52c, 52d, 52e, 62a, 62b, 62c, 62d) entourant le deuxième arbre (61) de manière rotative et respectivement au moins une roue dentée (53a, 53b, 53c, 53d, 53e, 63a, 63b, 63c, 63d) agencée sur la section d'arbre coaxial (52a, 52b, 52c, 52d, 52e, 62a, 62b, 62c, 62d), les roues dentées (63a, 63b, 63c, 63d) des unités de commutation (A, B, C) du deuxième arbre (61) étant en prise avec des roues dentées (53a, 53b, 53c, 53d, 53e) des unités de commutation (I, II, III, IV, V) du premier arbre (51) et les sections d'arbre coaxial (52a, 52b, 52c, 52d, 52e, 62a, 62b, 62c, 62d) pouvant être couplées au premier arbre (51) ou au deuxième arbre (61).

7. Boîte de vitesses selon la revendication 6, dans laquelle les unités de commutation (I, IV) du premier arbre (51) directement en prise avec les unités de commutation (A, B) du deuxième arbre (61) présentent au moins deux roues dentées (53a, 53d),
dans laquelle l'une respective des roues dentées (53a, 53d) est en prise avec une roue dentée (63c) de l'autre unité de commutation (C) du deuxième arbre (61) et l'autre respective des roues dentées (53a, 53d) est en prise avec une roue dentée (63a, 63b) des unités de commutation (A, B) du deuxième arbre (61).

8. Boîte de vitesses selon la revendication 6 ou 7, dans laquelle l'autre unité de commutation (C) du deuxième arbre (61) présente un nombre de roues dentées (63c) qui correspond au moins au nombre d'unités de commutation (I, II, III, IV, V) du premier arbre (51).

9. Boîte de vitesses selon l'une quelconque des revendications 1 à 8, dans laquelle au moins une unité de commutation (V) est agencée sur le deuxième arbre (61),
dans laquelle la section d'arbre coaxial (52e) de l'unité de commutation (V) du deuxième arbre (61) entoure de manière rotative une section d'arbre coaxial (62c) de l'une des unités de commutation (A, B, C) du deuxième arbre (61),
dans laquelle la section d'arbre coaxial (52e) de l'unité de commutation (V) du deuxième arbre (61) peut être couplée à la section d'arbre coaxial (62c) des unités de commutation (A, B, C) du deuxième arbre (61).

10. Boîte de vitesses selon l'une quelconque des revendications 1 à 9, dans laquelle un troisième arbre (41) est agencé parallèlement aux premier et deuxième arbres (51, 61) et est en communication avec le premier ou le deuxième arbre (51, 61) par l'intermédiaire d'un groupe de commutation (40), par exemple un groupe de commutation Hi-Lo,
dans laquelle le groupe de commutation (40) est adapté pour augmenter ou diminuer la vitesse de rotation.

11. Boîte de vitesses selon l'une quelconque des revendications 1 à 10, dans laquelle le troisième arbre (41) est agencé en amont du premier arbre (51) ou en aval du deuxième arbre (61).

12. Boîte de vitesses selon la revendication 11, dans laquelle des roues dentées primaires du groupe de commutation (40) sont agencées sur le troisième arbre (41) et des roues dentées secondaires du groupe de commutation (40) sont agencées sur le premier arbre (51), dans laquelle, dans un état de fonctionnement, un couple est transmis des roues dentées primaires aux roues dentées secondaires.

13. Boîte de vitesses selon l'une quelconque des revendications 10 à 12, dans laquelle le groupe de commutation (40) présente au moins deux paires de roues dentées (Hi, Lo) différentes qui diffèrent l'une de l'autre en termes de rapport de transmission.

14. Boîte de vitesses selon l'une quelconque des revendications 10 à 13, dans laquelle une unité d'inversion (45) est intégrée dans le groupe de commutation (40).

15. Boîte de vitesses selon la revendication 10 ou 14, dans laquelle le groupe de commutation (40) présente une troisième paire de roues dentées (Mid).
